# EUROPEAN PATENT SPECIFICATION

(11) **EP 4 155 991 B1**
(45) Date of publication and mention of the grant of the patent: **17.09.2025**
(21) Application number: 22186366.5
(22) Date of filing: 22.07.2022
(51) Int. Cl.: G06F 21/44, G06F 21/60, G06F 21/71, G06F 21/85, H04L 9/40

(54) **REMOTE DISAGGREGATED INFRASTRUCTURE PROCESSING UNITS (IPUS)**
DEZENTRALE DISAGGREGIERTE INFRASTRUKTUR-RECHENEINHEITEN (IPUS)
UNITÉS DE CALCUL D'INFRASTRUCTURE DÉSAGRÉGÉE À DISTANCE (IPUS)

(30) Priority: 24.09.2021 US 202117484193
(43) Date of publication of application: 29.03.2023
(73) Proprietor: INTEL Corporation, Santa Clara, CA 95054 (US)
(72) Inventor: Johnson, Salma, Littleton MA, 01460 (US); Galbi, Duane, Wayland MA, 01778 (US); Burres, Bradley, Waltham MA, 02453 (US); Niell, Jose, Franklin MA, 02038 (US); Kim, Jeongnim, Hillsboro OR, 97124 (US); Lal, Reshma, Portland OR, 97229 (US); Jayakumar, Anandhi, Portland OR, 97229 (US); Ganguli, Mrittika, Tempe AZ, 82581 (US); Willis, Thomas, Redwood City CA, 94061 (US)
(74) Representative: Samson & Partner Patentanwälte mbB

(56) References cited:
- US-A1- 2021 117 242
- US-A1- 2021 117 340
- SHIMPEI NOMURA ET AL: "Performance Analysis of the Multi-GPU System with ExpEther", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 42, no. 4, 3 December 2014 (2014-12-03), pages 9 - 14, XP058063077, ISSN: 0163-5964, DOI: 10.1145/2693714.2693717
- ANONYMOUS: "Content-addressable memory - Wikipedia", 31 August 2021 (2021-08-31), XP093009600, Retrieved from the Internet <URL:https://en.wikipedia.org/w/index.php?title=Content-addressable_memory&oldid=1041648674> [retrieved on 20221220]

## Description

### BACKGROUND

An Infrastructure Processing Unit (IPU) provides an important role in data centers by providing the datacenter operator, such as a Cloud Service Provider (CSP), a control point for security, acceleration, telemetry and service orchestration. IPU architecture builds upon existing SmartNIC features and is a part of controlling security and data acceleration within and across distributed platforms. It is a secure domain controlled by CSPs for managing a platform, providing services to tenants, and securing access into the data center network. The IPU increases the performance and predictability for distributed runtimes and enables scaling to multi-terabit throughputs by offloading host services, reliable transport, and optimizing data copies. The IPU being physically separate from the central processing unit (CPU) and XPU (heterogeneous processing unit) components provides several benefits including, but not limited to, reduced attack surface through physical isolation from untrusted tenant applications, per server scaling for simpler dimensioning and reduced blast radius, clear connectivity abstraction point and XPU vendor independence, multi-tenant and bare metal support, associativity of state for better table scaling and caching, and/pr an accelerator toolbox for XPU offload of connectivity related services.

These IPU characteristics are enabling new heterogeneous platform architectures with improved security, optimized data flows, and programmable acceleration to improve the performance of distributed services. These new architectures provide an optimized and secure blueprint that can span across Cloud, Enterprise, Edge and Telco deployments, enabling a consistent and seamless user experience in any location.

IPUs have grown in complexity over the years, starting with foundational network interface cards (NICs), whose purpose is to get packets into the host and out of it. With the addition of networking software offload, the NICs evolved to SmartNICs that were capable of offloading functions. Remote disaggregated storage architectures are a fast-evolving trend, where compute and storage are not co-located anymore, but large compute clusters can be connected to large storage clusters over the network. Increase in network speeds, and evolution of interface protocols made this a possibility. One of the advantages that remote disaggregated storage offers over direct attached storage is that compute and memory can be developed and updated at different cadences. As such, the amount of memory that is attached to a compute is not limited by physical addition or removal of hard-drives anymore but can be hot-plugged as a function. Current technologies enable IPUs to have firmware-controlled switches and enable the PCle switch itself to not be limited by hardware implementations.

IPUs continue to be attached to the host system, typically over PCle, and in the future over compute express link (CXL). IPUs offer a rich set of features, such as various compute and storage offloads, in addition to now having compute capabilities on the IPU itself. However, not all hosts systems require the complete feature set that IPUs now offer, causing under-utilization of attached IPUs.

SHIMPEI NOMURA et al.: "Performance Analysis of the Multi-GPU System with ExpEther" concerns a multi-GPU system with ExpEther which is a virtualization technique extending PCle of a host CPU to Ethernet. All devices connected by ExpEther are treated as if the devices were directly connected to the host.

US 2021/117242 A1 relates to an Infrastructure Processing Unit (IPU). For example, the IPU comprises: interface circuitry to provide a communicative coupling with a platform; network interface circuitry to provide a communicative coupling with a network medium; and circuitry to expose infrastructure services to be accessed by microservices for function composition.

US 2021/117340 A1 relates to cryptographic computing. For example, an application executing on a host node allocates a memory address of a remote node. The application selects, based at least in part on device capability information for the host and remote nodes, one of the host node or the remote node to encrypt application data, and configures the selected node to encrypt the application data based on a key and a pointer to the memory address of the remote node.

### SUMMARY

The present invention is defined in the independent claims. The dependent claims define embodiments thereof.

### BRIEF DESCRIPTION OF DRAWINGS

Various embodiments in accordance with the present disclosure will be described with reference to the drawings, in which:
**FIG. 1** is a block diagram illustrating a networking system configured to implement remote disaggregated IPUs in accordance with one or more aspects of the embodiments described herein.
**FIG. 2** is a block diagram illustrating an example networking system configured for remote disaggregated IPUs in accordance with one or more aspects of the embodiments described herein.
**FIG. 3** is a flow diagram illustrating a method for programming a network interface device for communication with remote disaggregated IPUs in accordance with one or more aspects of the embodiments described herein.
**FIG. 4** is a flow diagram illustrating a method for communicating with remote disaggregated IPUs in a networking system in accordance with one or more aspects of the embodiments described herein.
**FIG. 5** is a flow diagram illustrating a method for receiving communications at remote disaggregated IPUs in a networking system in accordance with one or more aspects of the embodiments described herein.
**FIG. 6** illustrates embodiments of an example system in accordance with one or more aspects of the embodiments described herein.
**FIG. 7** illustrates a block diagram of embodiments of a processor that may have more than one core, may have an integrated memory controller, and may have integrated graphics.
**FIG. 8(A)** is a block diagram illustrating both an example in-order pipeline and an example register renaming, out-of-order issue/execution pipeline in accordance with one or more aspects of the embodiments described herein.
**FIG. 8(B)** is a block diagram illustrating both an example embodiment of an in-order architecture core and an example register renaming, out-of-order issue/execution architecture core to be included in a processor in accordance with one or more aspects of the embodiments described herein.
**FIG. 9** illustrates embodiments of execution unit(s) circuitry in accordance with one or more aspects of the embodiments described herein.
**FIG. 10** is a block diagram of a register architecture according to some embodiments.
**FIG. 11** illustrates a block diagram contrasting the use of a software instruction converter to convert binary instructions in a source instruction set to binary instructions in a target instruction set in accordance with one or more aspects of the embodiments described herein.

### DETAILED DESCRIPTION

The present disclosure relates to methods, apparatus, systems, and non-transitory computer-readable storage media for remote disaggregated infrastructure processing units (IPUs).

An IPU can provide an important role in data centers by providing the datacenter operator, such as a Cloud Service Provider (CSP), a control point for security, acceleration, telemetry and service orchestration. IPU architecture may build upon existing Smart Network Interface Card (SmartNIC) features and is a part of controlling security and data acceleration within and across distributed platforms. It is a secure domain controlled by CSPs for managing a platform, providing services to tenants, and securing access into the data center network. The IPU increases the performance and predictability for distributed runtimes and enables scaling to multi-terabit throughputs by offloading host services, reliable transport, and optimizing data copies.

The IPU being physically separate from the central processing unit (CPU) and XPU (heterogeneous processing unit) components provides several benefits including, but not limited to, reduced attack surface through physical isolation from untrusted tenant applications; per server scaling for simpler dimensioning and reduced blast radius; clear connectivity abstraction point and XPU vendor independence; multi-tenant and bare metal support; associativity of state for better table scaling and caching; and/or accelerator toolbox for XPU offload of connectivity related services.

These IPU characteristics are enabling new heterogeneous platform architectures with improved security, optimized data flows, and programmable acceleration to improve the performance of distributed services. These new heterogeneous platform architectures provide an optimized and secure blueprint that can span across Cloud, Enterprise, Edge and Telco deployments, enabling a consistent and seamless user experience in any location.

Cloud-computing is at an inflection point, with two mutually reinforcing trends: (A) CSPs and the broader software ecosystem are driving the development of at-scale 'Cloud Native' services that are composed as distributed event-driven microservices, operating on ever increasing data sets beyond the scope of the rack scale. These deployment models are pushing for a rethinking of the datacenter that moves the abstractions between application and infrastructure higher and places requirements on the underlying distributed system designs. (B) To meet these at-scale requirements, CSPs are evolving their hardware platforms - to disaggregated elements consisting of general-purpose processors, heterogeneous accelerators and purpose-built vertically integrated IPUs (e.g., a current example is SmartNICs). IPUs form a valued control point for CSPs for security and coordination functions in addition to infrastructure offload and communications.

Modern data centers provide CPUs with a variety of offloads using SmartNICs/IPUs that are directly attached to the host. The offloads provided may be networking, storage, security etc. This allows the host to run without a hypervisor, and provides CSPs the capability of renting out the entire host in a datacenter to their security-minded customers, or avoid cross-talk and other problems associated with multi-tenant hosts.

IPUs have grown in complexity over the years, starting with foundational NICs, whose sole purpose was to get packets into the host and out of it. With the addition of networking software offload, the NICs evolved to become SmartNICs, that are capable of offloading functions, such as VSwitch, VIRTIO-Net, AVF, etc. Remote disaggregated storage architectures provide a further evolution, where compute and storage are not co-located anymore, but large compute clusters are connected to large storage clusters over the network. Increase in network speeds, and evolution of protocols made this a possibility. One of the advantages that remote disaggregated storage offers over direct attached storage is that compute and memory can be developed and updated at different cadences. The amount of memory that is attached to a compute node is not limited by physical addition or removal of hard-drives anymore, but can be hot-plugged as a PF to a PCIe Switch. Technologies such as Smart End Point enable IPUs to have firmware-controlled switches, along the PCle Switch itself to not be limited by hardware implementations.

However, IPUs continue to be attached to the host system, typically over PCle, and in the future over CXL. IPUs offer a rich set of features, such as various compute and storage offloads, in addition to now having compute capabilities on the IPU itself. Yet, not all hosts systems utilize the complete feature set that IPUs now offer, causing under-utilization of attached IPUs. As such, IPUs currently suffer from the classic problem of distributed systems, where they are either a scarce resource or a stranded resource. Similar to disaggregated storage then, being able to attach an IPU with flexible capabilities and pay for offload actually used by the host would provide a technical advantage.

One way to do this is provided by embodiments of the disclosure, which describe techniques for implementing disaggregated IPUs over the network and connecting to an IPU that has a minimum set of features. More specifically, embodiments of the disclosure provide for techniques for configuring and communicating between a host compute node and one or more associated disaggregated IPUs.

Implementations described herein provide for a variety of technical advantages over the conventional datacenter approach of a physically-connect IPU to a host system. Allowing IPUs to be disaggregated over the network, allows hosts to access features of the IPU that they utilize, and allow IPUs to be shared across hosts. In conventional data center solutions, IPUs are currently placed in the same physical node as compute. As compute and IPU are both the most power-hungry components of the data center, co-locating them exacerbates power requirements on both compute and IPU. Allowing the IPU and compute to be in different physical locations (e.g., disaggregated) can ease the power requirements and allow IPUs to be freed of power requirements imposed by compute. This further allows IPUs to grow in sophistication, by adding more advanced compute capabilities and FPGA to the IPU itself, for example. This brings efficiencies of distribute compute to IPUs

Moreover, in the conventional data center solutions, physical co-location of IPU and compute means that to access a different IPU, the PCIe card should be physically swapped out. This adds to data center total cost of ownership. Additionally, in order to meet the requests of all kinds of applications, IPU may support many different features and protocols. This results in higher complexity of IPU, which in turn means higher cost of validation and longer development and deployment times.

Disaggregating the IPU in embodiments herein allows for IPUs to be accessed remotely by the compute and the co-location requirement is not there anymore. This solution brings the advantages of remote disaggregated systems to IPU. It allows IPU to be located in a physically separate space from the compute host. It allows the IPU to be remotely accessible over the network by various compute nodes. It allows the IPUs to be a shared resourced, develop independently from compute, easily upgradable without a physical intervention. It alleviates power requirements on the IPU. It reduces the TCO of data centers.

Furthermore, in embodiments of the disclosure, disaggregated pools of IPUs can contain IPU pools with different capabilities. The compute node can choose which capability of IPU it utilizes and can upgrade or downgrade the capability. This brings technical advantages along the same lines as remote disaggregated storage to IPU.

With respect to security implications, security-sensitivity applications that utilize confidential computing through use of Trusted Execution Environments (TEEs) impose higher security and isolation requirements on IPU, which may result in some performance tradeoffs. Applications that do not have confidential computing requests do not want to pay performance penalty. With IPU disaggregation as provided herein, all applications do not have to be impacted to meet higher security demands of certain application. Applications with confidential computing demands can use a disaggregated IPU that is TEE-capable, while the ones that have lower security demands can choose IPU that can offer higher performance and has fewer security related overheads.

By disaggregating IPU, simpler IPUs can be built that specialize in certain features and protocols, thereby reducing cost of development and validation. This would also allow IPU products to be released more quickly to meet customers' demands in a timely manner. For CSPs, use of disaggregated IPUs also offers improved resilience against IPU failures, as the failed IPU that may be servicing a compute cluster can be seamlessly replaced with another functional IPU reducing the impact on compute clusters.

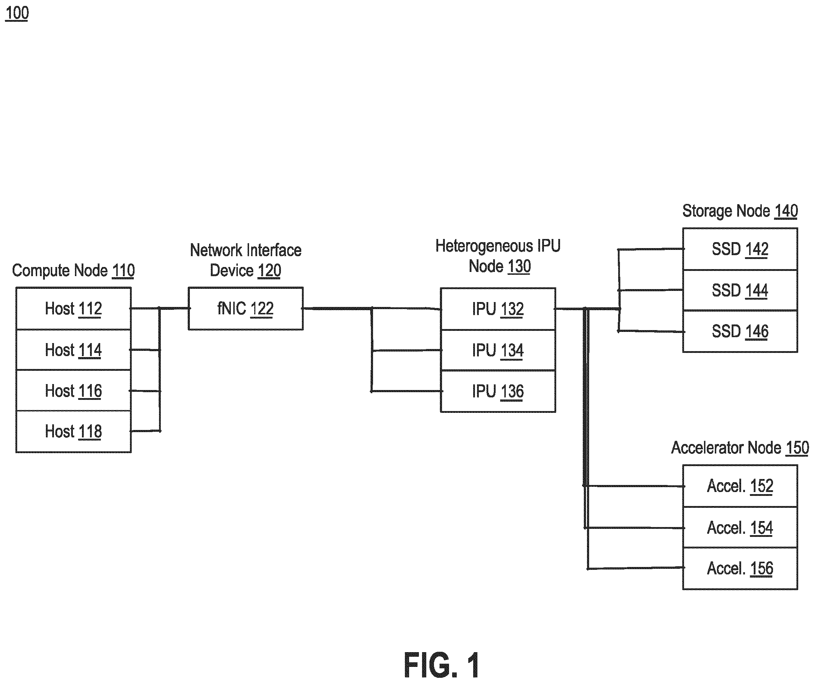

**FIG. 1** is a block diagram illustrating a networking system 100 configured to implement remote disaggregated IPUs in accordance with one or more aspects of the embodiments described herein. In one embodiment, networking system 100 can be a data center that utilizes a network architecture ("fabric") that supports multiple other network architectures including Ethernet and Omni-Path. The fabric of networking system 100 may include, for example, switches connected via optical fibers, which provide higher bandwidth and lower latency than typical twisted pair cabling (e.g., Category 5, Category 5e, Category 6, etc.). Due to the high bandwidth, low latency interconnections and network architecture, the data center of networking system 100 may, in use, pool resources, such as memory, accelerators (e.g., graphics processing unit (GPUs), graphics accelerators, FPGAs, ASICs, neural network and/or artificial intelligence accelerators, etc.), and data storage drives that are physically disaggregated, and provide them to compute resources (e.g., processors) when requested, enabling the compute resources to access the pooled resources as if they were local.

In one embodiment, the resources of networking system 100 may include, but are not limited to, a compute node 110, network interface device 120, heterogeneous IPU node 130, storage node 140, and/or accelerator node 150, each communicably coupled via a local or wide area network (not shown). Node as used herein may refer to one or more computing device(s) hosting a set of resources. It is to be noted that terms like "node", "computing node", "server", "server device", "cloud computer", "cloud server", "cloud server computer", "machine", "host machine", "device", "computing device", "computer", "computing system", and the like, may be used interchangeably throughout this document.

In one embodiment, networking system 100 implements remote disaggregated IPUs by pooling a set of IPUs 132, 134, 136 into a heterogeneous IPU node 130 (referred to herein as "IPU node 230") that is physically separate from a host 112-118 of a compute node 110 that is accessing the IPU(s) 132-136. The set of IPUs 132-136 are considered heterogeneous as they may each provide different capabilities (in terms of compute capabilities, security capabilities, etc.). Several classes of IPU are supported: Similar to remote disaggregated storage, where various classes of SSDs are available on the network, several flavors of IPU are available over the network

The IPU node 130 may be further communicably coupled with, for example, a storage node 140 including a pool of storage resources, such as solid state drives (SSD) 142, 144, 146, and with an accelerator node 150 including a pool of accelerator resources 152, 154, 156, such as FPGAs, GPUs, ASICs, etc. IPU node 130 may enable offload of the storage and/or accelerator capabilities provided by the resources of, respectively, storage node 140 and accelerator node 150, from the compute capabilities of host resources 112-118 provided by compute node 110. As such, the IPU(s) 132-136 is a remote disaggregated entity that is no longer attached to the host 112-118, but is available over the network. In embodiments herein, the host 112-118 can access IPU(s) 132-136 over the network using, for example, peripheral component interconnect express (PCle) over transport.

In embodiments herein, techniques are provided for secure communications between a host 112, 114, 116, 118 of compute node 110 and a disaggregated IPU 132-136 of IPU node 130 in networking system 100 that implements remote disaggregated IPUs. To enable secure communications, embodiments provide a network interface device 120, such as a foundational network interface card (fNIC) 122. Network interface device(s) 120, such as fNIC 122, provide access to a network, such as a LAN, a wide area network (WAN), a metropolitan area network (MAN), a personal area network (PAN), Bluetooth, a cloud network, a mobile network (e.g., 3rd Generation (3G), 4th Generation (4G), etc.), an intranet, the Internet, etc. Network interface(s) may include, for example, a wireless network interface having antenna, which may represent one or more antenna(s). Network interface(s) may also include, for example, a wired network interface to communicate with remote devices via network cable, which may be, for example, an Ethernet cable, a coaxial cable, a fiber optic cable, a serial cable, or a parallel cable.

In accordance with one embodiment, fNIC 122 provides a transaction layer packet (TLP) over transport capability. A TLP over transport capability refers to an ability of the fNIC 122 to wrap PCIe TLPs in a transport layer protocol, such as transmission control protocol (TCP) (e.g., ExpEther), remote direct memory access (RDMA) protocol (e.g., NetTLP), Internet Wide-area RDAM Protocol (iWARP), RDMA over Converged Ethernet (RoCE), or any custom reliable transport protocol. Although the description herein may reference RDAM or TCP specifically, one skilled in the art can implement other transport protocols in implementations of the disclosure. Similarly, in embodiments herein, each disaggregated IPU 132-136 can provide a TLP over transport capability so that the IPU 132-136 is able to also send and receive TLPs over a transport of choice.

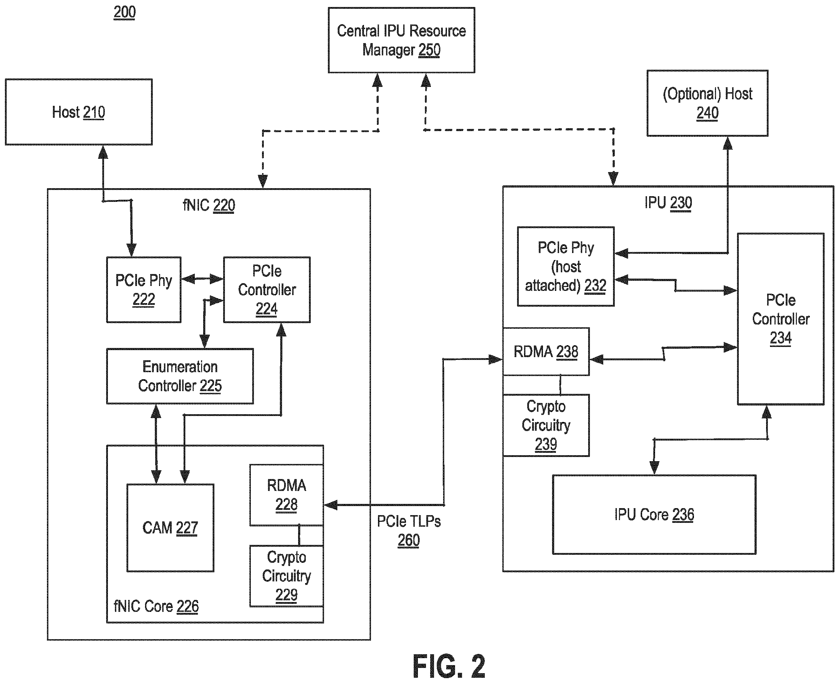

**FIG. 2** is a block diagram illustrating an example networking system 200 configured for remote disaggregated IPUs in accordance with one or more aspects of the embodiments described herein. In one embodiment, networking system 200 includes a host 210, fNIC 220, IPU 230, optional host 240, and central IPU resource manager 250. In one embodiment, host 210, 240 is the same as host 112-118 described with respect to FIG. 1, fNIC 220 is the same as fNIC 122 described with respect to FIG. 1, and IPU 230 is the same as IPU 132-136 described with respect to FIG. 1. Although an fNIC 220 is illustrated, other types of networking interface devices may also be utilized in embodiments herein and are not solely limited to an fNIC implementation. Central IPU resource manager 250 may be a centralized orchestrator component operating on a server device to manage and orchestrate a pool of remote disaggregated IPUs in networking system 200.

Although FIG. 2 is illustrated and described with respect to implementing a PCIe transport, other types of transports may be implemented and utilized in embodiments of the disclosure including, for example, Compute Express Link^{™} (CXL^{™}) interconnect or NVLink^{™} interconnect, to name a few examples. The PCIe transport is used in the illustration and description for example purposes and is not meant to be limiting to embodiments herein.

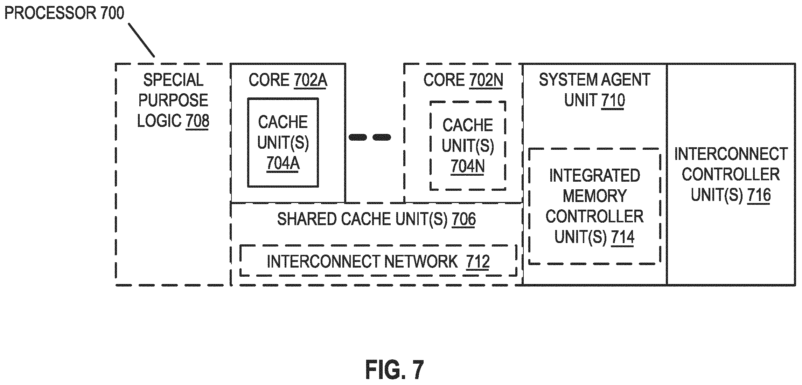

As illustrated in one example, fNIC 220 includes a PCIe PHY 222, which can refer to a physical (PHY) layer of the PCIe connection that includes digital logic that prepares packets (e.g., TLPs) for serial transmission on a communication link (and reversing that process for inbound packets) as well as an electrical analog interface that connects to the communication link and consists of differential drivers and receivers for each lane. The PCIe PHY 222 is coupled to a PCIe controller 224 manages the PCIe interface to the host 210 and the data transfer between the host 210 and any connected external devices, such as the IPU 230. In one embodiment, the PCIe controller 224 may be referred to herein as an interconnect controller, which may be, for example, the same as interconnect controller units 716 described with respect to FIG. 7 below. Interconnect controller may manage connections utilizing the various transport protocols described herein. The fNIC 220 further includes an enumeration controller 225 to manage a process of detecting external devices (such as remote disaggregated IPUs) connected to the host 210. The fNIC 220 also includes an fNIC core 226 having compute functionality, memory, transport functionality, and cryptographic functionality. In one embodiment, fNIC core 226 can be referred to herein as core circuitry.

In one embodiment, the PCIe controller 224 supports a Config Bypass mode. The Config Bypass mode may refer to a mode where all PCIe TLPs, including configuration (config) TLPs (also referred to herein a configuration packets or configuration cycle packets), are sent to the fNIC core 226, and not terminated in the PCIe controller 224 on the fNIC 220. The config TLPs may be utilized by enumeration controller 225 to generate mappings of one or more of the host ID, bus device function, and/or address mapped to a BAR, to the associated remote disaggregated IPU on the network.

In some embodiments, the central IPU Resource Manager 250 can maintain a repository of available remote disaggregated IPUs 230 in the data center and their capabilities. The host 210 could discover the available IPUs 230 by communicating with the central IPU resource manager 250 and request one or more IPUs 230 that the host 210 would like to utilize. The central IPU Resource manager 250 can assign IPUs 230 with the requested features to the host 210. Based on the information provided by the central IPU resource manager 250, the host 210 can configure the fNIC 220, for example via the enumeration controller 225, with information regarding the selected/assigned IPUs 230.

In embodiments herein, the fNIC 220 includes device security features, such as secure boot. Additionally, the fNIC 220 includes additional security features, such as being able attest a remote IPU using standard attestation protocol, such as Security Protocol Data Model (SPDM), and being able to cryptographically protect communication with the remote IPU using protocol such as IPSeC. In one embodiment, at the time of the configuration setup, either the host 210 or fNIC 220 can perform an attestation protocol with the IPU 230. In one embodiment, cryptographic circuitry 229 of the fNIC core 226 may manage the attestation process with the IPU 230. Upon successful attestation, shared secret keys are established. This may be done via standard protocols, such as Diffie Hellman or SPDM.

In one embodiment, the fNIC core 226 can include a lookup table, such as content addressable memory (CAM) 227, that matches a key (e.g., host ID, bus device function, and/or address mapped to a BAR) to a network address of a destination remote disaggregated IPU 230. In one example, a PCIe {Bus, Device, Function} or process address space ID (PASID) is mapped to an RDMA queue pair (QP) in the CAM 227. The fNIC core 226 may also include an RDMA backend 228, that encapsulates the PCIe TLPs in a transport and sends the encapsulated TLP over an RDMA transport to the targeted IPU 230 as determined based on the CAM 227 table lookup. Alternately, in some embodiments, other transports, such as TCP, may be used over any type of communication media.

As noted above, the fNIC 220 may perform an attestation process with the remote disaggregated IPU 230. During this attestation process, the IPU 230 can provide an attestation report to the fNIC 220 that allows the fNIC 220 to verify that the IPU 230 is a genuine IPU and is untampered. In addition to providing device authenticity info, the IPU 230 may provide measurements and/or version numbers of firmware running on the IPU 230 as part of attestation report. The IPU 230 can also support for cryptographic protection of data transfers with the fNIC 220.

In one embodiment, the IPU 230 can include an RDMA frontend (or any other transport front end, such as a TCP front end, for example), that can decapsulate the received TLPs 260 from RDMA and send the TLPs to the IPU's 230 PCIe controller 234. In one example, the decapsulated TLPs may be sent over a standard PCle PIPE interface. The IPU 230 may further include cryptographic circuitry 239 to decrypt the data transfers using shared secret keys established between the IPU 230 and the fNIC 220 upon successful attestation and/or authentication process.

Further, multiple incarnations can be supported in which the IPU 230. For example, in one embodiment, the IPU 230 may operate in a direct attached mode, where the PIPE interface is connected to a PCIe PHY 232, which communicated with a direct attached host 240. In one embodiment, as described above, the IPU 230 may operate in a network attached mode, where the PIPE interface is connected to the RDMA front end 238. In some embodiments, the IPU 230 can operate in a combination of direct attached mode and network attached mode, where a direct attached IPU may be used by a remote host. The IPU 230 may further include an IPU core 236 used to process received packets.

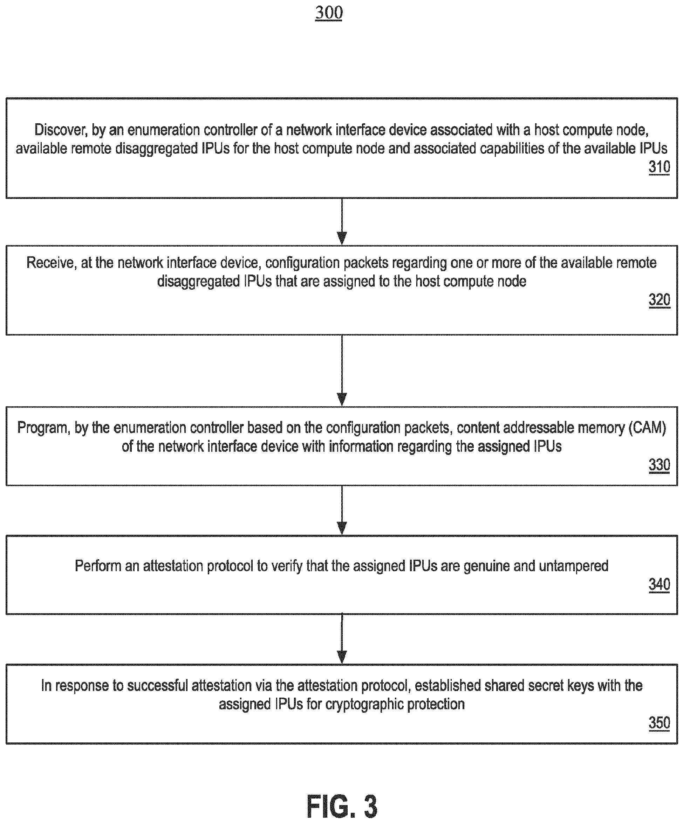

**FIG. 3** is a flow diagram illustrating a method 300 for programming a network interface device for communication with remote disaggregated IPUs, in accordance with one or more aspects of the embodiments described herein. Method 300 may be performed by processing logic that may comprise hardware (e.g., circuitry, dedicated logic, programmable logic, etc.), software (such as instructions run on a processing device), or a combination thereof. More particularly, the method 300 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

The process of method 300 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-2 may not be repeated or discussed hereafter. In one implementation, a network interface device, such as fNIC 220 described with respect to FIG. 2, may perform method 300.

Method 300 begins at block 310 where a network interface device may discover available remote disaggregated IPUs for a host compute node associated with the network interface device. The network interface device may also discover the associated capabilities of the available remote disaggregated IPUs. In one embodiment, an enumeration controller of the network interface device orchestrates the discovery process of block 310. In some embodiment, the discovery process may be based on information provided by a central IPU resource manager. At block 320, the network interface device may receive configuration packets (also referred to herein as configuration cycle packets) regarding remote disaggregated IPUs that are assigned to the host compute node.

Subsequently, at block 330, the network interface device may program, based on the configuration packets, content addressable memory (CAM) of the network interface device with information regarding the assigned IPUs. In one embodiment, the enumeration controller of the network interface device performs the programming of block 330.

At block 340, the network interface device may perform an attestation protocol to verify that the assigned IPUs are genuine and untampered. Lastly, at block 350, the network interface device may establish, in response to successful attestation via the attestation protocol, shared secret keys with the assigned IPUs for cryptographic protection.

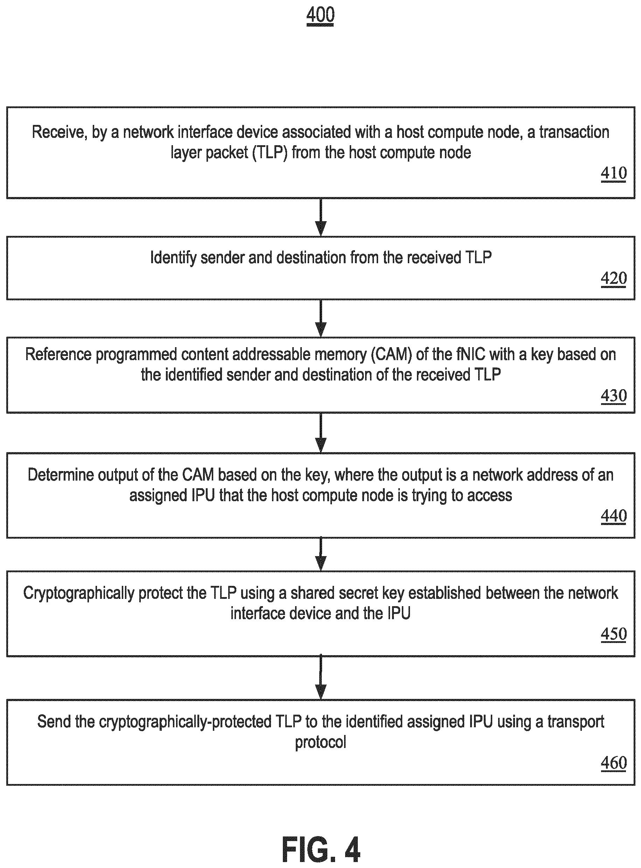

**FIG. 4** is a flow diagram illustrating a method 400 for communicating with remote disaggregated IPUs in a networking system, in accordance with one or more aspects of the embodiments described herein. Method 400 may be performed by processing logic that may comprise hardware (e.g., circuitry, dedicated logic, programmable logic, etc.), software (such as instructions run on a processing device), or a combination thereof. More particularly, the method 400 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

The process of method 400 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-3 may not be repeated or discussed hereafter. In one implementation, a network interface device, such as fNIC 220 described with respect to FIG. 2, may perform method 400.

Method 400 begins at block 410 where a network interface device may receive a TLP from a host compute node associated with the network interface device. In one embodiment, the network interface device is an fNIC. Then at block 420, the network interface device may identify a sender and a destination from the received TLP. Subsequently, at block 430, the network interface device may reference programmed CAM of the network interface device with a key. In one embodiment, the key is based on the identified sender and destination of the received TLP.

Then, at block 440, the network interface device may determine an output of the CAM based on the key. In one embodiment, the output is a network address of an assigned IPU that the host compute node is trying to access. At block 450, the network interface device may cryptographically protect the TLP using a shared secret key established between the network interface device and the IPU. Lastly, at block 460, the network interface device may send the cryptographically-protected TLP to the identified assigned IPU using a transport protocol.

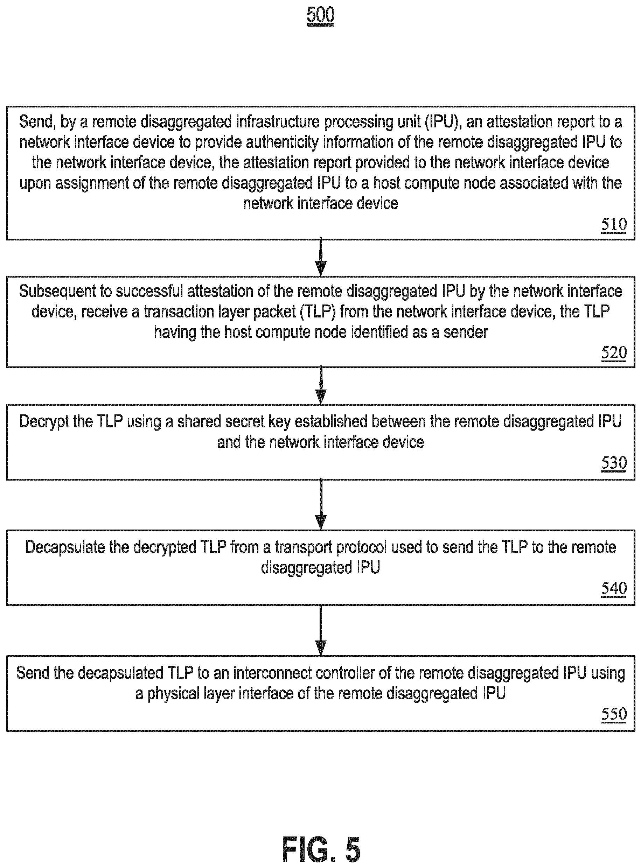

**FIG. 5** is a flow diagram illustrating a method 500 for receiving communications at remote disaggregated IPUs in a networking system, in accordance with one or more aspects of the embodiments described herein. Method 500 may be performed by processing logic that may comprise hardware (e.g., circuitry, dedicated logic, programmable logic, etc.), software (such as instructions run on a processing device), or a combination thereof. More particularly, the method 500 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

The process of method 500 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-4 may not be repeated or discussed hereafter. In one implementation, a remote disaggregated IPU, such as IPU 230 described with respect to FIG. 2, may perform method 500.

Method 500 begins at block 510 where a remote disaggregated IPU may send an attestation report to a network interface device to provide authenticity information of the remote disaggregated IPU to the network interface device. In one embodiment, the attestation report is provided to the network interface device upon assignment of the remote disaggregated IPU to a host compute node associated with the network interface device. At block 520, the remote disaggregated IPU may receive, subsequent to successful attestation of the disaggregated IPU by the network interface device, a TLP from the network interface device. In one embodiment, the TLP identifies the host compute node as a sender.

Subsequently, at block 530, the remote disaggregated IPU may decrypt the TLP using a shared secret key established between the remote disaggregated IPU and the network interface device. Then, at block 540, the remote disaggregated IPU may decapsulate the decrypted TLP from a transport protocol used to send the TLP to the remote disaggregated IPU. Lastly, at block 550, the remote disaggregated IPU may send the decapsulated TLP to an interconnect controller of the remote disaggregated IPU using a physical layer interface of the remote disaggregated IPU.

### Example Computer Architectures

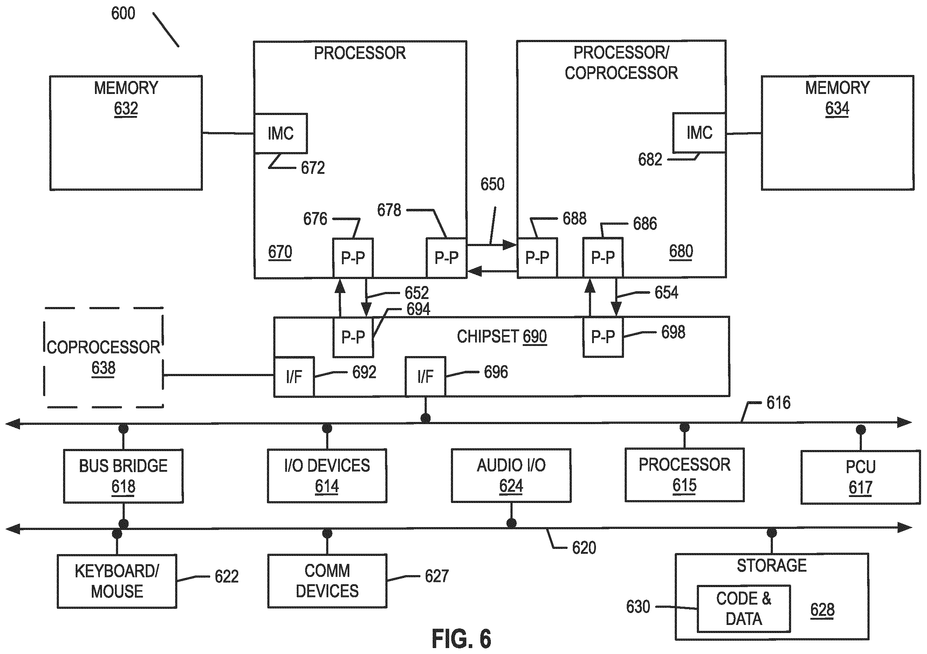

**Figures 6-10** are block diagrams of example computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

**FIG. 6** illustrates embodiments of an example system. Multiprocessor system 600 is a point-to-point interconnect system and includes a plurality of processors including a first processor 670 and a second processor 680 coupled via a point-to-point interconnect 650. In some embodiments, the first processor 670 and the second processor 680 are homogeneous. In some embodiments, first processor 670 and the second processor 680 are heterogenous. In one embodiment, one or more components of networking system 100, 200 described with respect to FIGS. 1 and 2, such as fNIC 122, 220 and/or IPU 132-136, 230 can include multiprocessor system 600 to implement the communications between remote disaggregated IPUs in a networking system as described herein.

Processors 670 and 680 are shown including integrated memory controller (IMC) units circuitry 672 and 682, respectively. Processor 670 also includes as part of its interconnect controller units' point-to-point (P-P) interfaces 676 and 678; similarly, second processor 680 includes P-P interfaces 686 and 688. Processors 670, 680 may exchange information via the point-to-point (P-P) interconnect 650 using P-P interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a chipset 690 via individual P-P interfaces 652, 654 using point to point interface circuits 676, 694, 686, 698. Chipset 690 may optionally exchange information with a coprocessor 638 via a high-performance interface 692. In some embodiments, the coprocessor 638 is a special-purpose processor, such as, for example, a high-throughput MIC processor, a network or communication processor, compression engine, graphics processor, GPGPU, embedded processor, or the like.

A shared cache (not shown) may be included in either processor 670, 680 or outside of both processors, yet connected with the processors via P-P interconnect, such that either or both processors' local cache information may be stored in the shared cache if a processor is placed into a low power mode.

Chipset 690 may be coupled to a first interconnect 616 via an interface 696. In some embodiments, first interconnect 616 may be a Peripheral Component Interconnect (PCI) interconnect, or an interconnect such as a PCI Express interconnect or another I/O interconnect. In some embodiments, one of the interconnects 616 couples to a power control unit (PCU) 617, which may include circuitry, software, and/or firmware to perform power management operations with regard to the processors 670, 680 and/or co-processor 638. PCU 617 provides control information to a voltage regulator to cause the voltage regulator to generate the appropriate regulated voltage. PCU 617 also provides control information to control the operating voltage generated. In various embodiments, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other embodiments, power management operations to be performed by PCU 617 may be implemented externally to a processor, such as by way of a separate power management integrated circuit (PMIC) or another component external to the processor. In yet other embodiments, power management operations to be performed by PCU 617 may be implemented within BIOS or other system software.

Various I/O devices 614 may be coupled to first interconnect 616, along with an interconnect (bus) bridge 618 which couples first interconnect 616 to a second interconnect 620. In some embodiments, one or more additional processor(s) 615, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 616. In some embodiments, second interconnect 620 may be a low pin count (LPC) interconnect. Various devices may be coupled to second interconnect 620 including, for example, a keyboard and/or mouse 622, communication devices 627 and a storage unit circuitry 628. Storage unit circuitry 628 may be a disk drive or other mass storage device which may include instructions/code and data 630, in some embodiments. Further, an audio I/O 624 may be coupled to second interconnect 620. Note that other architectures than the point-to-point architecture described above are possible. For example, instead of the point-to-point architecture, a system such as multiprocessor system 600 may implement a multi-drop interconnect or other such architecture.

### Example Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Example core architectures are described next, followed by descriptions of example processors and computer architectures.

**FIG. 7** illustrates a block diagram of embodiments of a processor 700 that may have more than one core, may have an integrated memory controller, and may have integrated graphics. The solid lined boxes illustrate a processor 700 with a single core 702A, a system agent 710, a set of one or more interconnect controller units circuitry 716, while the optional addition of the dashed lined boxes illustrates an alternative processor 700 with multiple cores 702(A)-(N), a set of one or more integrated memory controller unit(s) circuitry 714 in the system agent unit circuitry 710, and special purpose logic 708, as well as a set of one or more interconnect controller units circuitry 716. Note that the processor 700 may be one of the processors 670 or 680, or co-processor 638 or 615 of **FIG. 6****.** Furthermore, in one embodiment, one or more components of networking system 100, 200 described with respect to FIGS. 1 and 2, such as fNIC 122, 220 and/or IPU 132-136, 230 can include processor 700 to implement the communications between remote disaggregated IPUs in a networking system as described herein.

Thus, different implementations of the processor 700 may include: 1) a CPU with the special purpose logic 708 being integrated graphics and/or scientific (throughput) logic (which may include one or more cores, not shown), and the cores 702(A)-(N) being one or more general purpose cores (e.g., general purpose in-order cores, general purpose out-of-order cores, or a combination of the two); 2) a coprocessor with the cores 702(A)-(N) being a large number of special purpose cores intended primarily for graphics and/or scientific (throughput); and 3) a coprocessor with the cores 702(A)-(N) being a large number of general purpose in-order cores. Thus, the processor 700 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 700 may be a part of and/or may be implemented on one or more substrates using any of a number of process technologies, such as, for example, BiCMOS, CMOS, or NMOS.

A memory hierarchy includes one or more levels of cache unit(s) circuitry 704(A)-(N) within the cores 702(A)-(N), a set of one or more shared cache units circuitry 706, and external memory (not shown) coupled to the set of integrated memory controller units circuitry 714. The set of one or more shared cache units circuitry 706 may include one or more mid-level caches, such as level 2 (L2), level 3 (L3), level 4 (L4), or other levels of cache, such as a last level cache (LLC), and/or combinations thereof. While in some embodiments ring based interconnect network circuitry 712 interconnects the special purpose logic 708 (e.g., integrated graphics logic), the set of shared cache units circuitry 706, and the system agent unit circuitry 710, alternative embodiments use any number of well-known techniques for interconnecting such units. In some embodiments, coherency is maintained between one or more of the shared cache units circuitry 706 and cores 702(A)-(N).

In some embodiments, one or more of the cores 702(A)-(N) are capable of multi-threading. The system agent unit circuitry 710 includes those components coordinating and operating cores 702(A)-(N). The system agent unit circuitry 710 may include for example power control unit (PCU) circuitry and/or display unit circuitry (not shown). The PCU may be or may include logic and components utilized for regulating the power state of the cores 702(A)-(N) and/or the special purpose logic 708 (e.g., integrated graphics logic). The display unit circuitry is for driving one or more externally connected displays.

The cores 702(A)-(N) may be homogenous or heterogeneous in terms of architecture instruction set; that is, two or more of the cores 702(A)-(N) may be capable of executing the same instruction set, while other cores may be capable of executing a subset of that instruction set or a different instruction set.

### Example Core Architectures

### In-order and out-of-order core block diagram

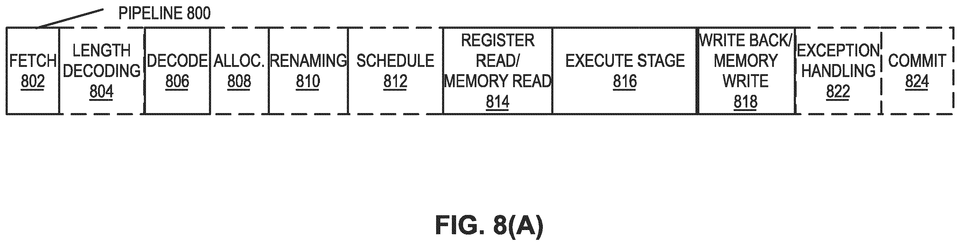

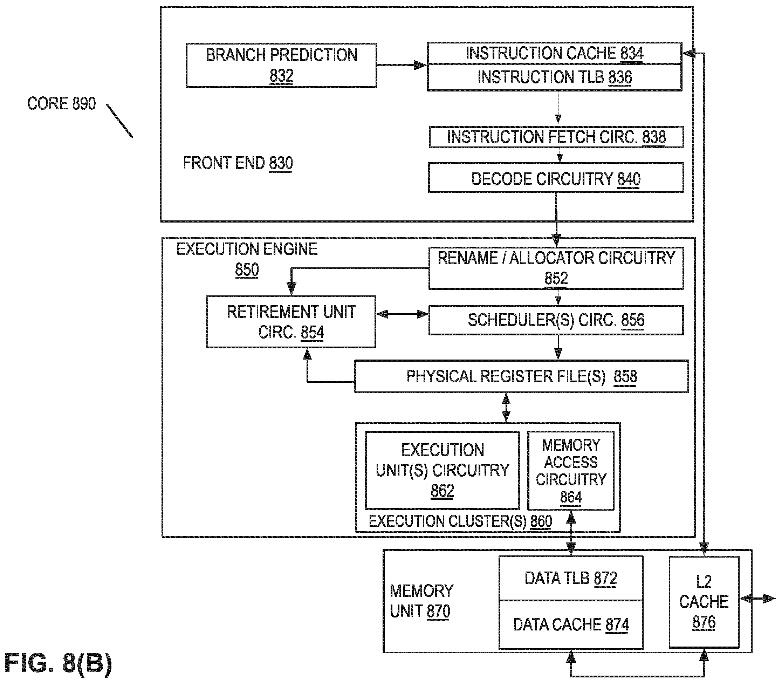

**FIG. 8(A)** is a block diagram illustrating both an example in-order pipeline and an example register renaming, out-of-order issue/execution pipeline in accordance with one or more aspects of the embodiments described herein. **FIG. 8(B)** is a block diagram illustrating both an example embodiment of an in-order architecture core and an example register renaming, out-of-order issue/execution architecture core to be included in a processor in accordance with one or more aspects of the embodiments described herein. The solid lined boxes in **FIGS. 8(A)-****(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described. Furthermore, in one embodiment, one or more components of networking system 100, 200 described with respect to FIGS. 1 and 2, such as fNIC 122, 220 and/or IPU 132-136, 230 can implement pipelines and/or architecture core examples of FIGS. 8(A) and 8(B) to implement the communications between remote disaggregated IPUs in a networking system as described herein.

In **FIG. 8(A)****,** a processor pipeline 800 includes a fetch stage 802, an optional length decode stage 804, a decode stage 806, an optional allocation stage 808, an optional renaming stage 810, a scheduling (also known as a dispatch or issue) stage 812, an optional register read/memory read stage 814, an execute stage 816, a write back/memory write stage 818, an optional exception handling stage 822, and an optional commit stage 824. One or more operations can be performed in each of these processor pipeline stages. For example, during the fetch stage 802, one or more instructions are fetched from instruction memory, during the decode stage 806, the one or more fetched instructions may be decoded, addresses (e.g., load store unit (LSU) addresses) using forwarded register ports may be generated, and branch forwarding (e.g., immediate offset or a link register (LR)) may be performed. In one embodiment, the decode stage 806 and the register read/memory read stage 814 may be combined into one pipeline stage. In one embodiment, during the execute stage 816, the decoded instructions may be executed, LSU address/data pipelining to an Advanced Microcontroller Bus (AHB) interface may be performed, multiply and add operations may be performed, arithmetic operations with branch results may be performed, etc.

By way of example, the example register renaming, out-of-order issue/execution core architecture may implement the pipeline 800 as follows: 1) the instruction fetch 838 performs the fetch and length decoding stages 802 and 804; 2) the decode unit circuitry 840 performs the decode stage 806; 3) the rename/allocator unit circuitry 852 performs the allocation stage 808 and renaming stage 810; 4) the scheduler unit(s) circuitry 856 performs the schedule stage 812; 5) the physical register file(s) unit(s) circuitry 858 and the memory unit circuitry 870 perform the register read/memory read stage 814; the execution cluster 860 perform the execute stage 816; 6) the memory unit circuitry 870 and the physical register file(s) unit(s) circuitry 858 perform the write back/memory write stage 818; 7) various units (unit circuitry) may be involved in the exception handling stage 822; and 8) the retirement unit circuitry 854 and the physical register file(s) unit(s) circuitry 858 perform the commit stage 824.

**FIG. 8(B)** shows processor core 890 including front-end unit circuitry 830 coupled to an execution engine unit circuitry 850, and both are coupled to a memory unit circuitry 870. The core 890 may be a reduced instruction set computing (RISC) core, a complex instruction set computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front end unit circuitry 830 may include branch prediction unit circuitry 832 coupled to an instruction cache unit circuitry 834, which is coupled to an instruction translation lookaside buffer (TLB) 836, which is coupled to instruction fetch unit circuitry 838, which is coupled to decode unit circuitry 840. In one embodiment, the instruction cache unit circuitry 834 is included in the memory unit circuitry 870 rather than the front-end unit circuitry 830. The decode unit circuitry 840 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 840 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 840 may be implemented using various different mechanisms. Examples of suitable mechanisms include, but are not limited to, look-up tables, hardware implementations, programmable logic arrays (PLAs), microcode read-only memories (ROMs), etc. In one embodiment, the core 890 includes a microcode ROM (not shown) or other medium that stores microcode for certain macroinstructions (e.g., in decode unit circuitry 840 or otherwise within the front end unit circuitry 830). In one embodiment, the decode unit circuitry 840 includes a micro-operation (micro-op) or operation cache (not shown) to hold/cache decoded operations, micro-tags, or micro-operations generated during the decode or other stages of the processor pipeline 800. The decode unit circuitry 840 may be coupled to rename/allocator unit circuitry 852 in the execution engine unit circuitry 850.

The execution engine circuitry 850 includes the rename/allocator unit circuitry 852 coupled to a retirement unit circuitry 854 and a set of one or more scheduler(s) circuitry 856. The scheduler(s) circuitry 856 represents any number of different schedulers, including reservations stations, central instruction window, etc. In some embodiments, the scheduler(s) circuitry 856 can include arithmetic logic unit (ALU) scheduler/scheduling circuitry, ALU queues, arithmetic generation unit (AGU) scheduler/scheduling circuitry, AGU queues, etc. The scheduler(s) circuitry 856 is coupled to the physical register file(s) circuitry 858. Each of the physical register file(s) circuitry 858 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical registerfile(s) unit circuitry 858 includes vector registers unit circuitry, writemask registers unit circuitry, and scalar register unit circuitry. These register units may provide architectural vector registers, vector mask registers, general-purpose registers, etc. The physical register file(s) unit(s) circuitry 858 is overlapped by the retirement unit circuitry 854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 854 and the physical register file(s) circuitry 858 are coupled to the execution cluster(s) 860. The execution cluster(s) 860 includes a set of one or more execution units circuitry 862 and a set of one or more memory access circuitry 864. The execution units circuitry 862 may perform various arithmetic, logic, floating point or other types of operations (e.g., shifts, addition, subtraction, multiplication) and on various types of data (e.g., scalar floating point, packed integer, packed floating point, vector integer, vector floating point). While some embodiments may include a number of execution units or execution unit circuitry dedicated to specific functions or sets of functions, other embodiments may include one execution unit circuitry or multiple execution units/execution unit circuitry that all perform all functions. The scheduler(s) circuitry 856, physical register file(s) unit(s) circuitry 858, and execution cluster(s) 860 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler circuitry, physical register file(s) unit circuitry, and/or execution cluster - and in the case of a separate memory access pipeline, certain embodiments are implemented in which the execution cluster of this pipeline has the memory access unit(s) circuitry 864). It should also be understood that where separate pipelines are used, one or more of these pipelines may be out-of-order issue/execution and the rest in-order.

In some embodiments, the execution engine unit circuitry 850 may perform load store unit (LSU) address/data pipelining to an Advanced Microcontroller Bus (AHB) interface (not shown), and address phase and writeback, data phase load, store, and branches.

The set of memory access circuitry 864 is coupled to the memory unit circuitry 870, which includes data TLB unit circuitry 872 coupled to a data cache circuitry 874 coupled to a level 2 (L2) cache circuitry 876. In one example embodiment, the memory access units circuitry 864 may include a load unit circuitry, a store address unit circuit, and a store data unit circuitry, each of which is coupled to the data TLB circuitry 872 in the memory unit circuitry 870. The instruction cache circuitry 834 is further coupled to a level 2 (L2) cache unit circuitry 876 in the memory unit circuitry 870. In one embodiment, the instruction cache 834 and the data cache 874 are combined into a single instruction and data cache (not shown) in L2 cache unit circuitry 876, a level 3 (L3) cache unit circuitry (not shown), and/or main memory. The L2 cache unit circuitry 876 is coupled to one or more other levels of cache and eventually to a main memory.

The core 890 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 890 includes logic to support a packed data instruction set extension (e.g., AVX1, AVX2), thereby allowing the operations used by many multimedia applications to be performed using packed data.

### Example Execution Unit(s) Circuitry

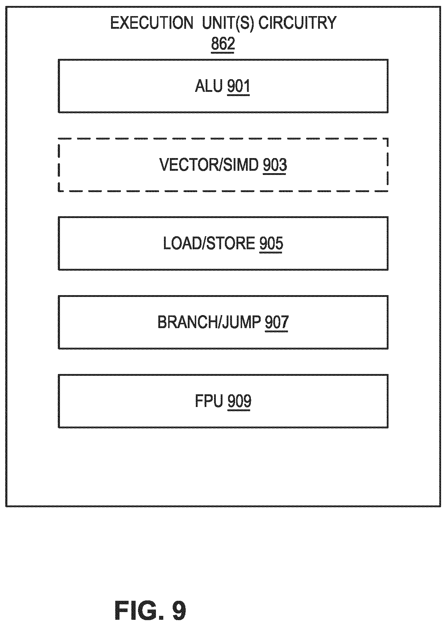

**FIG. 9** illustrates embodiments of execution unit(s) circuitry, such as execution unit(s) circuitry 862 of FIG. 8(B). As illustrated, execution unit(s) circuity 862 may include one or more ALU circuits 901, vector/SIMD unit circuits 903, load/store unit circuits 905, and/or branch/jump unit circuits 907. ALU circuits 901 perform integer arithmetic and/or Boolean operations. Vector/SIMD unit circuits 903 perform vector/SIMD operations on packed data (such as SIMD/vector registers). Load/store unit circuits 905 execute load and store instructions to load data from memory into registers or store from registers to memory. Load/store unit circuits 905 may also generate addresses. Branch/jump unit circuits 907 cause a branch or jump to a memory address depending on the instruction. FPU circuits 909 perform floating-point arithmetic. The width of the execution unit(s) circuitry 862 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Example Register Architecture

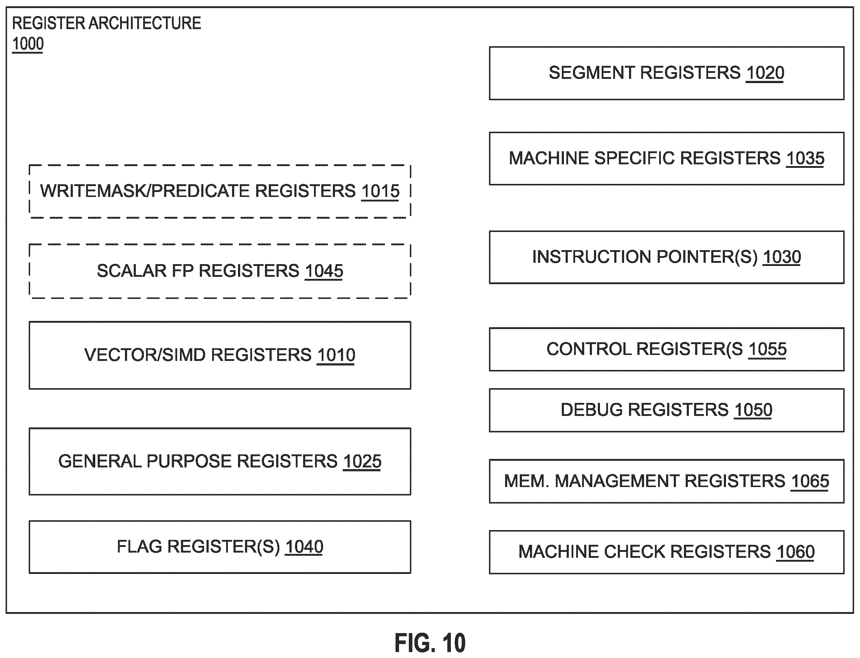

**FIG. 10** is a block diagram of a register architecture 1000 according to some embodiments. Furthermore, in one embodiment, one or more components of networking system 100, 200 described with respect to FIGS. 1 and 2, such as fNIC 122, 220 and/or IPU 132-136, 230 can include register architecture 1000 to aid in implementing the communications between remote disaggregated IPUs in a networking system as described herein. As illustrated, there are vector/SIMD registers 1010 that vary from 128-bit to 1,024 bits width. In some embodiments, the vector/SIMD registers 1010are physically 512-bits and, depending upon the mapping, some of the lower bits are used. For example, in some embodiments, the vector/SIMD registers 1010 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1000 includes writemask/predicate registers 1015. For example, in some embodiments, there are 8 writemask/predicate registers (sometimes called k0 through k7) that are each 16-bit, 32-bit, 64-bit, or 128-bit in size. Writemask/predicate registers 1015 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1015 corresponds to a data element position of the destination. In other embodiments, the writemask/predicate registers 1015 are scalable and consists of a set number of enable bits for a given vector element (e.g., 8 enable bits per 64-bit vector element).

The register architecture 1000 includes a plurality of general-purpose registers 1025. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1000 includes scalar floating point register 1045 which is used for scalar floating-point operations on 32/64/80-bit floating point data using the x87 instruction set extension or as MMX registers to perform operations on 64-bit packed integer data, as well as to hold operands for some operations performed between the MMX and XMM registers.

One or more flag registers 1040 (e.g., EFLAGS, RFLAGS, etc.) store status and control information for arithmetic, compare, and system operations. For example, the one or more flag registers 1040 may store condition code information such as carry, parity, auxiliary carry, zero, sign, and overflow. In some embodiments, the one or more flag registers 1040 are called program status and control registers.

Segment registers 1020 contain segment points for use in accessing memory. In some embodiments, these registers are referenced by the names CS, DS, SS, ES, FS, and GS.

Machine specific registers (MSRs) 1035 control and report on processor performance. Most MSRs 1035 handle system related functions and are not accessible to an application program. Machine check registers 1060 consist of control, status, and error reporting MSRs that are used to detect and report on hardware errors.

One or more instruction pointer register(s) 1030 store an instruction pointer value. Control register(s) 1055 (e.g., CR0-CR4) determine the operating mode of a processor (e.g., processor 670, 680, 638, 615, and/or 700) and the characteristics of a currently executing task. Debug registers 1050 control and allow for the monitoring of a processor or core's debugging operations.

Memory management registers 1065 specify the locations of data structures used in protected mode memory management. These registers may include a GDTR, IDRT, task register, and a LDTR register.

Alternative embodiments of the disclosure may use wider or narrower registers. Additionally, alternative embodiments of the disclosure may use more, less, or different register files and registers.

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media (also referred to as a computer-readable storage medium) may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing thereon electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

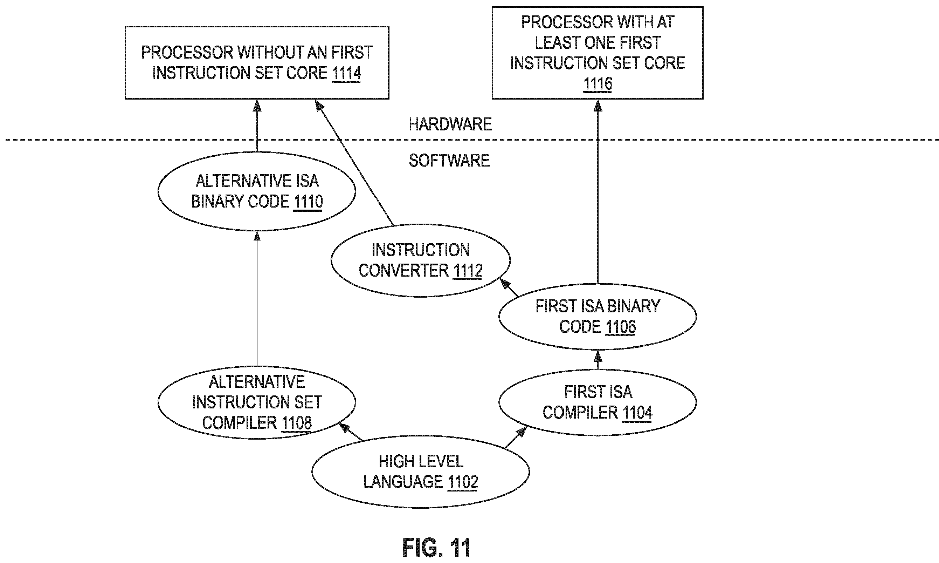

**FIG. 11** illustrates a block diagram contrasting the use of a software instruction converter to convert binary instructions in a source instruction set to binary instructions in a target instruction set according to embodiments of the disclosure. In one embodiment, one or more components of networking system 100, 200 described with respect to FIGS. 1 and 2, such as fNIC 122, 220 and/or IPU 132-136, 230 can implement the instruction conversion process described with respect to FIG. 11 as part of enabling the communications between remote disaggregated IPUs in a networking system as described herein.

In the illustrated embodiment, the instruction converter is a software instruction converter, although alternatively the instruction converter may be implemented in software, firmware, hardware, or various combinations thereof. **FIG. 11** shows a program in a high level language 1102 may be compiled using a first ISA compiler 1104 to generate first ISA binary code 1106 that may be natively executed by a processor with at least one first instruction set core 1116. The processor with at least one first ISA instruction set core 1116 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel^{®} processor with at least one first ISA instruction set core, in order to achieve substantially the same result as a processor with at least one first ISA instruction set core. The first ISA compiler 1104 represents a compiler that is operable to generate first ISA binary code 1106 (e.g., object code) that can, with or without additional linkage processing, be executed on the processor with at least one first ISA instruction set core 1116. Similarly, **FIG. 11** shows the program in the high level language 1102 may be compiled using an alternative instruction set compiler 1108 to generate alternative instruction set binary code 1110 that may be natively executed by a processor without a first ISA instruction set core 1114. The instruction converter 1112 is used to convert the first ISA binary code 1106 into code that may be natively executed by the processor without a first ISA instruction set core 1114. This converted code is not likely to be the same as the alternative instruction set binary code 1110 because an instruction converter capable of this is difficult to make; however, the converted code will accomplish the general operation and be made up of instructions from the alternative instruction set. Thus, the instruction converter 1112 represents software, firmware, hardware, or a combination thereof that, through emulation, simulation or any other process, allows a processor or other electronic device that does not have a first ISA instruction set processor or core to execute the first ISA binary code 1106.

References to "one embodiment," "an embodiment," "an example embodiment," etc., indicate that the embodiment described may include a particular feature, structure, or characteristic, but every embodiment may not include the particular feature, structure, or characteristic. Moreover, such phrases may not be referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment utilizes at least one of A, at least one of B, or at least one of C to each be present.

The specification and drawings are, accordingly, to be regarded in an illustrative rather than a restrictive sense. It will, however, be evident that various modifications and changes may be made thereunto without departing from the scope of the disclosure as set forth in the claims.

## Claims

1. A network interface device (120) associated with a host compute node (110), the network interface device (120) comprising:
an interconnect controller to:
receive a transaction layer packet, TLP, from the host compute node (110);
identify a sender and a destination from the TLP; and
provide, to a content addressable memory, CAM, a key determined from the sender and the destination; and
core circuitry communicably coupled to the interconnect controller, the core circuitry to:
determine an output of the CAM based on the key, the output comprising a network address of an infrastructure processing unit, IPU, (130) assigned to the host compute node (110), wherein the IPU (130) is disaggregated from the host compute node (110) over a network; and
send the TLP to the IPU (130) encapsulated in a transport protocol.

2. The network interface device (120) of claim 1, wherein the core circuitry is further to cryptographically-protect the TLP using a shared secret key established between the network interface device (120) and the IPU (130).

3. The network interface device (120) of claim 2, wherein the shared secret key is established upon successful attestation of the IPU (130) with the network interface device (120), and wherein the successful attestation is based on an enumeration controller of the network interface device (120) receiving an attestation report from the IPU (130) that provides for genuine authenticity of the IPU (130), the attestation report comprising measurements and version numbers of firmware running on the IPU (130).

4. The network interface device (120) of claim 1, wherein the IPU (130) is to decapsulate the TLP sent from the core circuitry and provide the decapsulated TLP to the interconnect controller of the IPU (120).

5. The network interface device (120) of claim 1, wherein the network interface device (120) comprises a foundational network interface card, fNIC, (220), and wherein the transport protocol comprises at least one of remote direct memory access, RDMA, or transmission control protocol, TCP.

6. The network interface device (120) of claim 1, wherein the interconnect controller comprises a peripheral component interconnect express, PCIe, controller, and where the key comprises at one of a PCIe bus ID, a PCIe device ID, a PCIe function ID, or a process address space identifier, PASID.

7. The network interface device (120) of claim 1, wherein the output of the CAM comprises a remote direct memory access, RDMA, queue pair.

8. A method (400) comprising:
receiving, by a network interface device, a transaction layer packet, TLP, from a host compute node (410);
identifying, by the network interface device, a sender and a destination from the TLP (420);
providing, by the network interface device to a content addressable memory, CAM, a key determined from the sender and the destination (430);
determining, by the network interface device, an output of the CAM based on the key (440), the output comprising a network address of an infrastructure processing unit, IPU, assigned to the host compute node, wherein the IPU is disaggregated from the host compute node over a network; and
sending, by the network interface device, the TLP to the IPU encapsulated in a transport protocol (460).

9. The method (400) of claim 8, further comprising cryptographically protecting the TLP using a shared secret key established between the network interface device and the IPU (450), wherein the shared secret key is established upon successful attestation of the IPU with the network interface device.

10. The method (400) of any one of claims 8-9, wherein the successful attestation is based the network interface device receiving an attestation report from the IPU that provides for genuine authenticity of the IPU, the attestation report comprising measurements and version numbers of firmware running on the IPU.

11. The method (400) of any one of claims 8-10, wherein the IPU is to decapsulate the TLP sent from the network interface device and provide the decapsulated TLP to an interconnect controller of the IPU.

12. The method (400) of any one of claims 8-11, wherein the network interface device comprises a peripheral component interconnect express, PCIe, controller, and where the key comprises at one of a PCIe bus ID, a PCIe device ID, a PCIe function ID, or a process address space identifier, PASID.

13. At least one machine readable medium comprising a plurality of instructions that in response to being executed on the network interface device (120) of any one of claims 1-7, cause the network interface device (120) to carry out the method (400) according to any one of claims 8-12.

## Patentansprüche

1. Netzwerkschnittstellenvorrichtung (120), die mit einem Host-Rechenknoten (110) assoziiert ist, wobei die Netzwerkschnittstellenvorrichtung (120) Folgendes umfasst:
eine Verbindungssteuerung, um:
ein Transaktionsschichtpaket, TLP, von dem Host-Rechenknoten (110) zu empfangen;
einen Absender und ein Ziel aus dem TLP zu identifizieren; und
an einen inhaltsadressierbaren Speicher, CAM, einen Schlüssel bereitzustellen, der von dem Sender und dem Ziel bestimmt wird; und
eine Kernschaltungsanordnung, die kommunikativ mit der Verbindungssteuerung gekoppelt ist, wobei die Kernschaltungsanordnung dazu dient:
eine Ausgabe des CAM basierend auf dem Schlüssel zu bestimmen, wobei die Ausgabe eine Netzwerkadresse einer Infrastrukturverarbeitungseinheit, IPU, (130) umfasst, die dem Host-Rechenknoten (110) zugewiesen ist, wobei die IPU (130) von dem Host-Rechenknoten (110) über ein Netzwerk disaggregiert ist; und
das TLP an die IPU (130) zu senden, die in einem Transportprotokoll eingekapselt ist.

2. Netzwerkschnittstellenvorrichtung (120) nach Anspruch 1, wobei die Kernschaltungsanordnung ferner dazu dient, das TLP unter Verwendung eines gemeinsam genutzten geheimen Schlüssels, der zwischen der Netzwerkschnittstellenvorrichtung (120) und der IPU (130) eingerichtet ist, kryptografisch zu schützen.

3. Netzwerkschnittstellenvorrichtung (120) nach Anspruch 2, wobei der gemeinsam genutzte geheime Schlüssel nach erfolgreicher Attestierung der IPU (130) mit der Netzwerkschnittstellenvorrichtung (120) eingerichtet wird und wobei die erfolgreiche Attestierung auf einer Aufzählungssteuerung der Netzwerkschnittstellenvorrichtung (120) basiert, die einen Attestierungsbericht von der IPU (130) empfängt, der eine echte Authentizität der IPU (130) bereitstellt, wobei der Attestierungsbericht Messungen und Versionsnummern der auf der IPU (130) ablaufenden Firmware umfasst.

4. Netzwerkschnittstellenvorrichtung (120) nach Anspruch 1, wobei die IPU (130) das von der Kernschaltungsanordnung gesendete TLP entkapseln und das entkapselte TLP an die Verbindungssteuerung der IPU (120) bereitstellen soll.

5. Netzwerkschnittstellenvorrichtung (120) nach Anspruch 1, wobei die Netzwerkschnittstellenvorrichtung (120) eine grundlegende Netzwerkschnittstellenkarte, fNIC, (220) umfasst und wobei das Transportprotokoll einen Remote-Direktspeicherzugriff, RDMA und/oder ein Übertragungssteuerprotokoll, TCP, umfasst.

6. Netzwerkschnittstellenvorrichtung (120) nach Anspruch 1, wobei die Verbindungssteuerung eine Peripheriekomponenten-Verbindungs-Express-Steuerung, PCIe-Steuerung, umfasst und wo der Schlüssel an einer einer PCIe-Bus-ID, eine PCIe-Vorrichtungs-ID, eine PCIe-Funktions-ID oder eine Prozessadressraumkennung, PASID, umfasst.

7. Netzwerkschnittstellenvorrichtung (120) nach Anspruch 1, wobei die Ausgabe des CAM ein RDMA-Warteschlangenpaar (Remote Direct Memory Access) umfasst.

8. Verfahren (400), das Folgendes umfasst:
Empfangen, durch eine Netzwerkschnittstellenvorrichtung, eines Transaktionsschichtpakets, TLP, von einem Host-Rechenknoten (410);
Identifizieren, durch die Netzwerkschnittstellenvorrichtung, eines Absenders und eines Ziels aus dem TLP (420);
Bereitstellen eines Schlüssels, der von dem Sender und dem Ziel bestimmt wird, durch die Netzwerkschnittstellenvorrichtung an einen inhaltsadressierbaren Speicher, CAM, (430);
Bestimmen, durch die Netzwerkschnittstellenvorrichtung, einer Ausgabe des CAM basierend auf dem Schlüssel (440), wobei die Ausgabe eine Netzwerkadresse einer Infrastrukturverarbeitungseinheit, IPU, umfasst, die dem Host-Rechenknoten zugewiesen ist, wobei die IPU von dem Host-Rechenknoten über ein Netzwerk disaggregiert wird; und
Senden, durch die Netzwerkschnittstellenvorrichtung, des TLP an die IPU, die in einem Transportprotokoll eingekapselt ist (460).

9. Verfahren (400) nach Anspruch 8, das ferner kryptografisches Schützen des TLP unter Verwendung eines gemeinsam genutzten geheimen Schlüssels umfasst, der zwischen der Netzwerkschnittstellenvorrichtung und der IPU (450) eingerichtet ist, wobei der gemeinsam genutzte geheime Schlüssel bei erfolgreicher Attestierung der IPU mit der Netzwerkschnittstellenvorrichtung eingerichtet wird.

10. Verfahren (400) nach einem der Ansprüche 8-9, wobei die erfolgreiche Attestierung darauf basiert, dass die Netzwerkschnittstellenvorrichtung einen Attestierungsbericht von der IPU empfängt, der eine echte Authentizität der IPU bereitstellt, wobei der Attestierungsbericht Messungen und Versionsnummern von auf der IPU ablaufenden Firmware umfasst.

11. Verfahren (400) nach einem der Ansprüche 8-10, wobei die IPU dazu dient, das von der Netzwerkschnittstellenvorrichtung gesendete TLP zu entkapseln und das entkapselte TLP einer Verbindungssteuerung der IPU bereitzustellen.

12. Verfahren (400) nach einem der Ansprüche 8-11, wobei die Netzwerkschnittstellenvorrichtung eine Peripheriekomponenten-Verbindungs-Express-Steuerung, PCIe-Steuerung, umfasst und wobei der Schlüssel an einer einer PCIe-Bus-ID, eine PCIe-Vorrichtungs-ID, eine PCIe-Funktions-ID oder eine Prozessadressraumkennung, PASID, umfasst.

13. Mindestens ein maschinenlesbares Medium, das eine Vielzahl von Anweisungen umfasst, die, als Reaktion darauf, dass sie auf der Netzwerkschnittstellenvorrichtung (120) eines beliebigen der Ansprüche 1-7 ausgeführt werden, die Netzwerkschnittstellenvorrichtung (120) veranlassen, das Verfahren (400) nach einem der Ansprüche 8-12 durchzuführen.

## Revendications

1. Dispositif d'interface réseau (120) associé à un nœud de calcul hôte (110), le dispositif d'interface réseau (120) comprenant :
un contrôleur d'interconnexion pour :
recevoir un paquet de couche de transaction, TLP, en provenance du nœud de calcul hôte (110) ;
identifier un expéditeur et une destination à partir du TLP ; et
fournir, à une mémoire adressable par contenu, CAM, une clé déterminée à partir de l'expéditeur et de la destination ; et
des circuits de cœur couplés de manière communicable au contrôleur d'interconnexion, les circuits de cœur étant destinés à :
déterminer une sortie de la CAM sur la base de la clé, la sortie comprenant une adresse réseau d'une unité de traitement d'infrastructure, IPU, (130) attribuée au nœud de calcul hôte (110), où l'IPU (130) est désagrégée du nœud de calcul hôte (110) sur un réseau ; et
envoyer à l'IPU (130) le TLP encapsulé dans un protocole de transport.

2. Dispositif d'interface réseau (120) selon la revendication 1, dans lequel les circuits du cœur sont en outre destinés à protéger par cryptographie le TLP à l'aide d'une clé secrète partagée établie entre le dispositif d'interface réseau (120) et l'IPU (130).

3. Dispositif d'interface réseau (120) selon la revendication 2, dans lequel la clé secrète partagée est établie après attestation réussie de l'IPU (130) auprès du dispositif d'interface réseau (120), et dans lequel l'attestation réussie est basée sur un contrôleur d'énumération du dispositif d'interface réseau (120) recevant un rapport d'attestation de l'IPU (130) qui fournit l'authenticité véritable de l'IPU (130), le rapport d'attestation comprenant des mesures et des numéros de version du micrologiciel s'exécutant sur l'IPU (130).

4. Dispositif d'interface réseau (120) selon la revendication 1, dans lequel l'IPU (130) est conçue pour désencapsuler le TLP envoyé depuis les circuits du cœur et fournir le TLP désencapsulé au contrôleur d'interconnexion de l'IPU (120).

5. Dispositif d'interface réseau (120) selon la revendication 1, dans lequel le dispositif d'interface réseau (120) comprend une carte d'interface réseau de base, fNIC, (220), et dans lequel le protocole de transport comprend au moins l'un parmi l'accès direct à la mémoire à distance, RDMA, ou le protocole de contrôle de transmission, TCP.

6. Dispositif d'interface réseau (120) selon la revendication 1, dans lequel le contrôleur d'interconnexion comprend un contrôleur PCIe, Peripheral Component Interconnect Express, et dans lequel la clé comprend au moins l'un parmi un identifiant de bus PCIe, un identifiant de dispositif PCIe, un identifiant de fonction PCIe ou un identifiant d'espace d'adressage de processus, PASID.

7. Dispositif d'interface réseau (120) selon la revendication 1, dans lequel la sortie de la CAM comprend une paire de files d'attente d'accès direct à la mémoire à distance, RDMA.

8. Procédé (400) comprenant :
la réception, par un dispositif d'interface réseau, d'un paquet de couche de transaction, TLP, provenant d'un nœud de calcul hôte (410) ;
l'identification, par le dispositif d'interface réseau, d'un expéditeur et d'une destination à partir du TLP (420) ;
la fourniture, par le dispositif d'interface réseau à une mémoire adressable par le contenu, CAM, d'une clé déterminée à partir de l'expéditeur et de la destination (430) ;
la détermination, par le dispositif d'interface réseau, d'une sortie de la CAM sur la base de la clé (440), la sortie comprenant une adresse réseau d'une unité de traitement d'infrastructure, IPU, attribuée au nœud de calcul hôte, où l'IPU est désagrégée du nœud de calcul hôte sur un réseau ; et
l'envoi, par le dispositif d'interface réseau, à l'IPU, du TLP encapsulé dans un protocole de transport (460).

9. Procédé (400) selon la revendication 8, comprenant en outre la protection cryptographique du TLP à l'aide d'une clé secrète partagée établie entre le dispositif d'interface réseau et l'IPU (450), où la clé secrète partagée est établie après attestation réussie de l'IPU auprès du dispositif d'interface réseau.

10. Procédé (400) selon l'une quelconque des revendications 8 et 9, dans lequel l'attestation réussie est basée sur la réception par le dispositif d'interface réseau d'un rapport d'attestation provenant de l'IPU qui fournit l'authenticité véritable de l'IPU, le rapport d'attestation comprenant des mesures et des numéros de version du micrologiciel s'exécutant sur l'IPU.

11. Procédé (400) selon l'une quelconque des revendications 8 à 10, dans lequel l'IPU est conçue pour désencapsuler le TLP envoyé depuis le dispositif d'interface réseau et fournir le TLP désencapsulé à un contrôleur d'interconnexion de l'IPU.

12. Procédé (400) selon l'une quelconque des revendications 8 à 11, dans lequel le dispositif d'interface réseau comprend un contrôleur PCIe, Peripheral Component Interconnect Express, et dans lequel la clé comprend l'un d'un identifiant de bus PCIe, d'un identifiant de dispositif PCIe, d'un identifiant de fonction PCIe ou d'un identifiant d'espace d'adressage de processus, PASID.

13. Au moins un support lisible par machine comprenant une pluralité d'instructions qui, en réponse à leur exécution sur le dispositif d'interface réseau (120) de l'une quelconque des revendications 1 à 7, amènent le dispositif d'interface réseau (120) à exécuter le procédé (400) selon l'une quelconque des revendications 8 à 12.
